# FASCICULE DE BREVET EUROPEEN

(11) **EP 1 086 142 B1**
(45) Date de publication et mention de la délivrance du brevet: **27.03.2002**
(21) Numéro de dépôt: 99920913.3
(22) Date de dépôt: 25.05.1999
(51) Int. Cl.: C08B 37/16

(54) **PROCEDE DE PREPARATION REGIOSELECTIF DE DERIVES MONOSULFONYLES EN C-6 DES CYCLODEXTRINES**
REGIOSELEKTIVES VERFAHREN ZUR HERSTELLUNG VON C-6 MONOSULFONYLCYCLODEXTRINDERIVATEN
REGION-SELECTIVE METHOD FOR PREPARING CYCLODEXTRIN C-6 MONOSULPHONYL DERIVATIVES

(30) Priorité: 26.05.1998 FR 9806605
(43) Date de publication de la demande: 28.03.2001
(73) Titulaire: CENTRE NATIONAL DE LA RECHERCHE SCIENTIFIQUE (CNRS), 75794 Paris Cedex 16 (FR)
(72) Inventeur: DEFAYE, Jacques, F-38330 Saint Ismier (FR); CROUZY, Serge, F-38960 Saint Etienne de Crossey (FR); EVRARD, Nicolas, F-38240 Meylan (FR); LAW, Ho, F-38240 Meylan (FR)
(74) Mandataire: Audier, Philippe André
(86) Numéro de dépôt international: FR9901217
(87) Numéro de publication internationale: WO9961483

(56) Documents cités:
- R. C. PETTER ET AL.: "Cooperative binding by aggregated mono-6-(alkylamino)-beta-cyclodextrins" JOURNAL OF THE AMERICAN CHEMICAL SOCIETY, vol. 112, 1990, pages 3860-3868, XP002090504 US cité dans la demande
- Y. MATSUI ET AL.: "The formation and structure of copper(II) complexes with cyclodextrins in an alkaline solution" BULLETIN OF THE CHEMICAL SOCIETY OF JAPAN, vol. 48, 1975, pages 2187-2191, XP002090505 jp cité dans la demande

## Description

La présente invention est relative à un procédé de préparation régiosélectif de dérivés monosulfonylés en C-6 des cyclodextrines et en particulier de la bêta cyclodextrine.

Les dérivés monosulfonylés des cyclodextrines trouvent en particulier leur application en tant que produit de départ pour l'accès aux dérivés monofonctionnalisés des cyclodextrines.

Les cyclodextrines, ou cyclomaltooligosaccharides, sont des produits naturels obtenus par transformation biotechnologique de l'amidon, qui est une ressource agricole disponible en grandes quantités.

Les cyclodextrines, ou cyclomaltooligosaccharides, sont des oligosaccharides cycliques qui ont la propriété d'inclure dans leur cavité des molécules diverses, de taille adaptée à celle de la structure hôte.

Le caractère généralement apolaire de ces associations conduit à inclure préférentiellement des structures de type hydrophobe, permettant notamment la solubilisation dans l'eau de composés peu ou pas solubles dans ces milieux.

Parmi les dérivés de cyclodextrines, les sulfonates de cyclodextrines, et en particulier les p-toluènesulfonates, constituent une classe de dérivés importants car ils permettent de réaliser des réactions de substitution nucléophile sur les carbones concernés, et donc d'introduire des groupes fonctionnels variés, azide, amine, halogénure, thiocyanate, thiol etc, et, par l'intermédiaire de ces groupes réactifs, des substituants acyle, alkyle et aryle ou encore de provoquer des réactions intramoléculaires (époxydes, 3,6-anhydrides).

Ces modifications structurales sont largement exploitées pour modifier les propriétés physico-chimiques des cyclodextrines, et notamment leur solubilité, ainsi que leurs propriétés de solubilisation et d'inclusion.

C'est ainsi que les documents WO-A-95/19994, WO-A-95/21870, EP-A-0403366, PCT/FR97/00447, décrivent le greffage de substituants glucose, amino-acyle, peptidyle, glycopeptidyle ou alkyle au moyen de liaisons oxygénée, soufrée ou thiourée.

Dans tous les cas étudiés, les augmentations de solubilité de la cyclodextrine greffée, ainsi que l'amélioration des propriétés de solubilisation sont très importantes et peuvent même atteindre un facteur de 100.

Les propriétés cytotoxiques et notamment hémolytiques des cyclodextrines greffées ainsi obtenues sont par ailleurs généralement considérablement améliorées comme rapporté par M. Bost et al. dans J. Incl. Phenom. Mol. Recogn., 29 (1997) 57-63.

De façon plus spécifique, parmi les sulfonates de cyclodextrine mentionnés plus haut, les dérivés monosulfonylés, et en particulier les 6^{I}-mono-p-toluènesulfonates constituent des dérivés de choix pour l'accès aux dérivés mono fonctionnalisés des cyclodextrines.

Or, les dérivés monofonctionnalisés des cyclodextrines en position alcool primaire constituent une classe de dérivés de cyclodextrines particulièrement importante au niveau des applications.

Des travaux de V. Lainé et al. dans J. Chem. Soc., Perkin Trans. 2, 1995, pp 1479-1487 ont en effet montré que ce type de structure avait généralement des propriétés d'inclusion considérablement améliorées par rapport aux mêmes dérivés impliquant une substitution totale de la couronne des hydroxyles primaires.

Ceci est dû au fait que :
i) L'encombrement stérique crée par la persubstitution limite l'entrée de la structure incluse dans le cas où la dynamique de l'inclusion implique l'entrée par le côté des hydroxyles primaires ;
ii) La stabilisation de la structure incluse dans la cavité fait fréquemment intervenir la formation de liaisons hydrogène entre l'un des hydroxyles primaires de la cyclodextrine et l'un des groupes fonctionnels de la structure incluse.

Ainsi les dérivés monosulfonylés des cyclodextrines, et notamment les 6^{I}-mono-p-toluènesulfonates, sont-ils en particulier les produits de départ obligés pour l'accès aux 6^{I}-amino-6^{I}-désoxycyclodextrines utilisés pour préparer les mono-thiouréidocyclodextrines, agents de solubilisation de principes pharmacologiquement actifs décrits dans la demande de brevet international CNRS PCT/FR97/9700447.

La préparation des composés sulfonylés de cyclodextrines a fait l'objet de nombreuses publications.

Ainsi, les premiers tosylates de cyclodextrines ont-ils été décrits par Von W. Lautsch et al. dans Kolloid-Ztg., 135 (1954) 134, par S. Umezawa et K. Tatsuta dans Bull. Chem. Soc, Jpn, 41 (1968) 464, et par F.CRAMER et al. dans Chem. Ber. 102 (1969) 494.

Ces travaux concernent tous des essais de pertosylation régiosélective en position alcool primaire des cyclodextrines.

Ashton et al. dans J. Org. Chem., 56 (1991) 7274-7280 rapportent une amélioration de ces techniques permettant d'obtenir les per-6-0-p-tolysulfonyl-α et β-cyclodextrines avec des rendements respectifs de 1% et 5% en utilisant un excès du réactif chlorure de p-toluènesulfonyle dans la pyridine.

Tous les documents cités ci-dessus concernent donc la pertosylation , or on a vu plus haut que les dérivés monosulfonylés présentaient un intérêt particulier.

Il était donc intéressant de disposer d'un procédé de synthèse spécifique de tels composés.

La mono-p-toluènesulfonylation régiosélective en C-6 de l'α-cyclodextrine a été décrite pour la première fois par L.D Melton et K.L Slessor dans Carbohydr. Res., 18 (1971) 29-37. Ces auteurs utilisent le chlorure de p-toluènesulfonyle dans la pyridine comme réactif et purifient le mélange de 6-O-p-toluènesulfonylcyclomaltoheptaoses obtenus par chromatographie sur colonne de charbon actif.

Le 6^{I}-O-p-tolysulfonylcyclomaltohexaose est obtenu avec un rendement final de 46%.

Cette technique a ensuite été étendue à la β-cyclodextrine par Y. Matsui et al. dans Chem. Lett., (1976) 1037-1040, par I. Tabushi et al. dans J. Am. Chem. Soc., 99 (1977) 7100-7102 et par Y.MATSUI et A. Okimoto dans Bull. Chem. Soc. Jpn., 51 (1978) 3030-3034.

Le 6^{I}-O-p-tolysulfonylcyclomaltoheptaose est obtenu avec un rendement moyen de 30% mais n'est pas complètement pur car contaminé par des di- et tri-tosylates.

J. Defaye et al. [Carbohydr. Res. 192 (1989), 251-258] ont décrit une amélioration de cette technique qui permet d'obtenir ce dérivé avec une pureté améliorée et un rendement de 26%.

Cette amélioration consiste essentiellement à modifier les proportions de réactifs et le temps de réaction.

Une autre approche pour l'obtention du 6^{I}-0-p-tolysulfonylcyclomaltoheptaose a été proposée par K. Takahashi et al. dans Tetrahedron Lett. 25 (1984) 3331-3334, puis par R.C. Petter et al. dans J. Am. Chem. Soc., 112 (1990) 3860-3868.

Elle utilise le même réactif, le chlorure de p-toluènesulfonyle en solution dans l'acetonitrile, qui est ajouté à une solution de β-cyclodextrine dans l'eau, contenant de l'hydroxyde de sodium.

Au bout de 2 h à température ambiante, un précipité est obtenu, qui contient essentiellement le 6^{I}-0-p-tolysulfonylcyclomaltoheptaose.

Après recristallisation, ce composé est obtenu avec un rendement de 11 % et une pureté nettement améliorée par rapport au procédé utilisant la pyridine comme solvant (p.f 179°C contre 160-162°C pour le procédé dans la pyridine).

Les résultats de K.Takahashi et al, publiés dans Tetrahedron Lett., 25 (1984) 3331-3334 indiquent que ce faible rendement est probablement associé à un manque de sélectivité du réactif, conduisant à des dérivés substitués en C-2 et C-3 de la cyclodextrine.

Les deux techniques principales de monosulfonylation des cyclodextrines en particulier de la β-cyclodextrine décrites plus haut sont illustrées sur le schéma suivant :

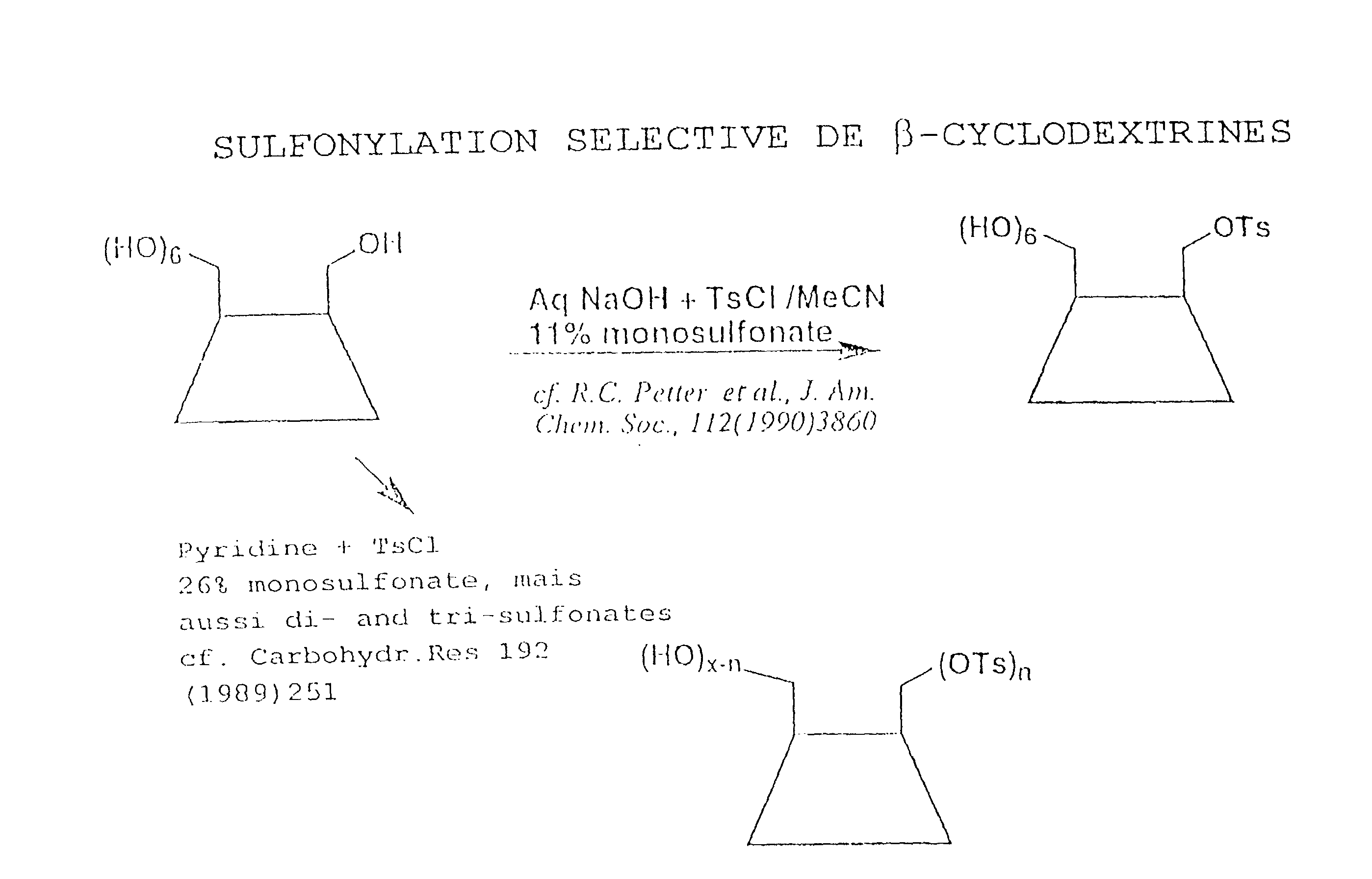

Ces deux procédés de la littérature susmentionnée conduisent tous deux à des rendements médiocres, ne dépassant pas 30% pour le procédé utilisant la pyridine, et 11% pour le procédé qui se déroule dans l'eau en présence d'hydroxyde de sodium.

Le 6^{I}-O-p-tolysulfonylcyclomaltoheptaose obtenu est cependant nettement plus pur avec le second procédé.

Par ailleurs, le procédé dans l'eau est économiquement plus intéressant pour des applications industrielles que celui utilisant la pyridine.

Les rendements globaux sont cependant trop faibles dans les deux cas pour permettre d'envisager une mise en oeuvre industrielle de l'un ou l'autre procédé.

Il existe donc un besoin pour un procédé de préparation sélectif de dérivés monosulfonylés des cyclodextrines et en particulier de la β-cyclodextrine qui permette d'obtenir une sélectivité amélioré, et donc un rendement global accru, en dérivé 6^{I}-sulfonylé de la cyclodextrine et en particulier en dérivé 6^{I}-sulfonylé de la β-cyclodextrine.

Il existe encore un besoin pour un procédé conduisant en outre à un produit final d'une grande pureté, avec un nombre minimal d'étapes simples, et mettant en oeuvre des réactifs facilement disponibles et d'un faible coût.

Le but de l'invention est de fournir un procédé de préparation régiosélectif de dérivés monosulfonylés des cyclodextrines, et en particulier de la β-cyclodextrine (cyclomaltoheptaose) qui réponde, entre autres, à ces besoins, qui ne présente pas les inconvénients, défauts, limitations et désavantages des procédés de l'art antérieur, et qui apporte une solution aux problèmes posés par les procédés de l'art antérieur.

Ce but, et d'autres, encore sont atteints, conformément à l'invention par un procédé de préparation régiosélectif d'un dérivé monosulfonylé en C-6 d'une cyclodextrine, dans lequel on fait réagir ladite cyclodextrine avec un agent de sulfonylation, dans une solution aqueuse alcaline, en présence d'un sel de métal susceptible de former un complexe de coordination avec les groupes hydroxyles secondaires de la cyclodextrine, et à l'issue de la réaction on récupère ledit dérivé monosulfonylé en C-6 de la cyclodextrine à partir du mélange réactionnel.

Ladite cyclodextrine est choisie parmi les α-, β-, et γ- cyclodextrines ; la β-cyclodextrine étant préférée.

Le procédé selon l'invention, présente, par rapport aux procédés de l'art antérieur, et en particulier par rapport au procédé dans l'eau décrit dans la publication de R.C. PETTER et al, une régiosélectivité et un rendement améliorés de manière surprenante puisque dans le cas de la β-cyclodextrine le rendement moyen en produit final est généralement de 45 à 50 % et peut atteindre jusqu'à 60 %.

De bons résultats sont également obtenus avec les α- et γ- cyclodextrines, mais les rendements sont toutefois généralement moins élevés.

Le produit obtenu est par ailleurs d'une grande pureté, c'est-à-dire dépassant généralement 95% lors de la première cristallisation.

En outre, le solvant utilisé est de l'eau ce qui est extrêmement avantageux par rapport à la mise en oeuvre de solvants organiques tels que le pyridine ; il est à noter que bien que de l'eau soit mise en oeuvre comme solvant, le procédé selon l'invention améliore de manière tout à fait étonnante les rendements qui sont très faibles dans les procédés dans l'eau de l'art antérieur.

Enfin, le procédé selon l'invention est simple et présente l'avantage de ne comporter qu'une seule étape essentielle, et de ne mettre en oeuvre que des réactifs courants, facilement disponibles et d'un coût relativement faible ce qui le rend économiquement très intéressant pour une application industrielle.

Les inventeurs ont pu démontrer, en utilisant la modélisation moléculaire, corrélée à des résultats d'analyse élémentaire et de spectroscopie de RMN, que l'agent de sulfonylation, tel que le chlorure de p-toluènesulfonyle, réagissait avec la cyclodextrine par exemple avec la β-cyclodextrine, par inclusion préalable dans sa cavité.

Lorsque la réaction est réalisée dans la pyridine, la topologie de l'inclusion implique une entrée exclusive du réactif par l'orifice des hydroxyles primaires, la pyridine initialement incluse étant déplacée de son complexe d'inclusion énergétiquement moins favorisé, par le côté des hydroxyles secondaires.

Lorsque la réaction est réalisée dans l'eau, ce schéma est inopérant et le réactif est susceptible d'être inclus par les deux côtés de la cavité, ce qui conduit à la répartition en C-6, mais également en C-2, C-3, des substituants tosyle expérimentalement observée, et à des rendements faibles de sulfonylation en C-6.

Les conditions réactionnelles spécifiques du procédé de l'invention surmontent ces difficultés et privilégient l'entrée de l'agent de sulfonylation, par exemple du réactif arylchlorosulfonylé, par le côté des hydroxyles primaires de la cyclodextrine, par exemple de la β-cyclodextrine.

Des travaux de Y. Matsui et al. dans Bull Chem. Soc. Jpn., 48 (1975) 2187-2191 ont rapporté que le cuivre (II), en milieu alcalin aqueux, pourrait interagir avec les α- et β-cyclodextrines en formant des complexes de coordination de stoechiométrie 2:1 impliquant les hydroxyles secondaires de la cyclodextrine.

La formation de tels complexes a été confirmé à l'état solide par des études en cristallographie de rayons X réalisées par P. Klüfers et al et R. Fuchs et al. et rapportées dans Chem. Eur. J., 3 (1997) 601-608 et Angew. Chem. Int. Ed. Engl, 32 (1993) 852-854, respectivement.

Ces auteurs mettent en évidence une interaction de type "sandwich" entre le cuivre (II) et les faces des hydroxyles secondaires des deux molécules de cyclodextrines, à l'état solide.

Les inventeurs ont mis en évidence que la formation de complexes stables entre le métal, tel que le cuivre (II), et la cyclodextrine, dans les conditions du procédé de l'invention, est susceptible en masquant l'orifice des hydroxyles secondaires de la cyclodextrine, d'améliorer la sélectivité de l'inclusion de l'agent de sulfonylation, tel que le réactif arylchlorosulfonylé, par l'orifice des hydroxyles primaires, et donc le rendement final en dérivé recherché, par exemple 6^{I}-arylsulfonylé.

Le fait de mettre à profit la formation de tels complexes pour améliorer la sélectivité de la sulfonylation au niveau des hydroxyles primaires est totalement surprenant et n'a ni été décrit ni suggéré dans l'art antérieur, où l'utilisation de ces complexes dans le cadre d'une synthèse régiosélective n'est absolument pas évoquée.

Le procédé de l'invention est illustré sur le schéma suivant, dans le cas d'un agent de sulfonylation constitué de chlorure de tosyle et d'un sel de métal constitué de sulfate de cuivre.

On note l'interaction des hydroxyles secondaires de la cyclodextrine avec l'hydroxyde de cuivre.

Sur ce schéma, on matérialise l'interaction de type "sandwich", mais celle-ci peut également faire intervenir une seule molécule de cyclodextrine avec les ions métalliques en particulier les ions cuivre.

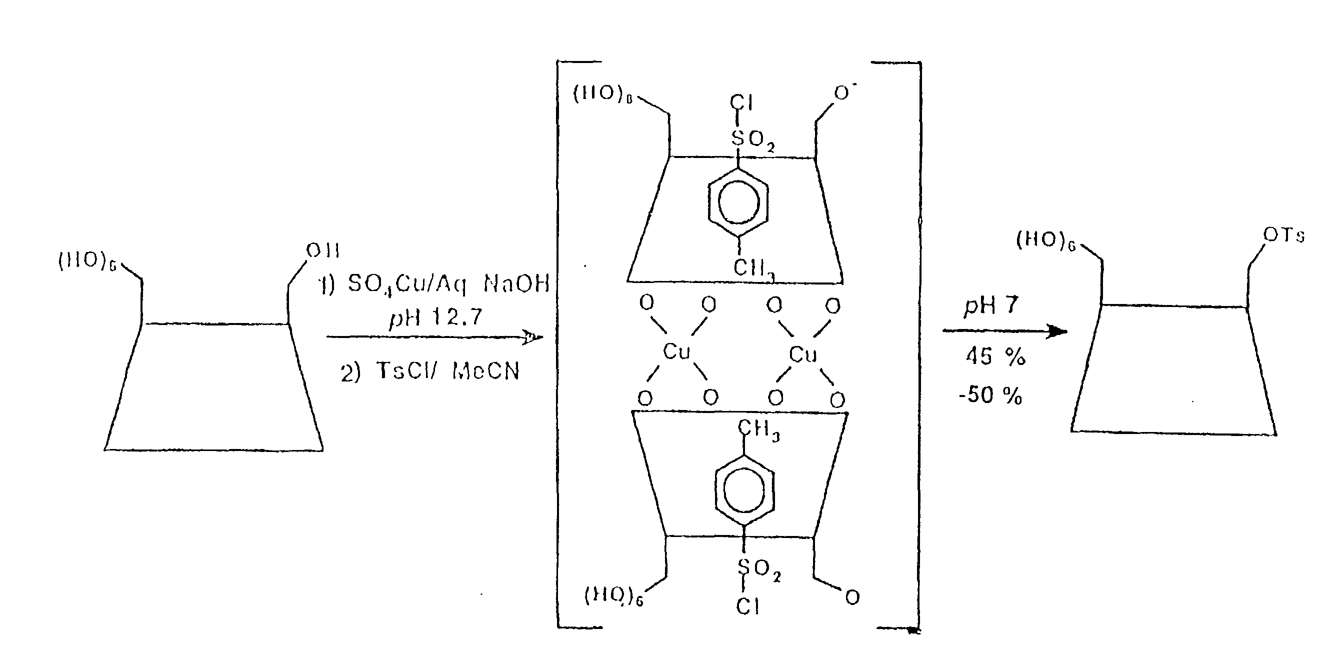

L'agent de sulfonation peut être tout agent de sulfonation connu de l'homme du métier, mais il est choisi de préférence parmi les chlorure d'alkyl- et d'aryl-sulfonyle, le groupe alkyle comprenant par exemple de 1 à 3 C tel que le groupe méthyle ou isopropyle, et le groupe aryle comprenant par exemple de 6 à 10 C, tel que le groupe phényle, le groupe naphtyle...; ce groupe aryle pouvant éventuellement être substitué par un ou plusieurs substituants tels que des groupes alkyle ou alcoxy de 1 à 9 C tels que méthyle, isopropyle, méthoxy, etc...

Le groupe aryle substitué est de préférence encore le chlorure de paratoluène sulfonyle (chlorure de tosyle).

Le sel de métal susceptible de former un complexe de coordination avec les groupes hydroxyles secondaires de la cyclodextrine telle que la β-cyclodextrine est généralement choisi parmi les sels de lithium, plomb et cuivre ; les sels de cuivre étant préférés.

Ledit sel de métal susceptible de former un complexe de coordination avec les groupes hydroxyles primaires est généralement choisi par exemple parmi les nitrate et sulfate de ce métal.

Le sel préféré est le sulfate de cuivre qui forme le plus facilement l'hydroxyde de cuivre intervenant dans le complexe, donne ainsi les meilleurs rendements, et qui de plus est d'un faible coût.

Selon l'invention, la réaction a lieu dans une solution aqueuse alcaline, c'est-à-dire que le solvant utilisé est l'eau et non par exemple la pyridine comme dans certains procédés de l'art antérieur.

Le pH de la solution aqueuse alcaline formant le milieu réactionnel est de préférence supérieur ou égal à 8 ; la plage de pH préférée est 12,7-12,8, pour laquelle on obtient généralement le meilleur rendement en produit final.

Le pH alcalin est obtenu en ajoutant une base telle que de l'hydroxyde de sodium sous forme de solution aqueuse au milieu réactionnel.

On peut, afin de réaliser la réaction, procéder par exemple de la manière suivante : on commence par préparer une solution de cyclodextrine, par exemple de β-cyclodextrine, dans l'eau à une concentration par exemple de 5 à 20 % en poids, puis on ajoute successivement à cette solution, tout d'abord une solution de sel de métal dans l'eau à une concentration par exemple de 10 à 60 g/l, puis une solution de base (par exemple de NaOH) dans l'eau à une concentration par exemple de 10 à 25 g/l.

On agite le mélange obtenu, de préférence à la température ambiante, pendant par exemple 5 à 30 minute puis on ajoute au mélange homogène, de préférence goutte à goutte, une solution d'agent de sulfonylation à une concentration par exemple de 80 à 225 g/l dans un solvant adéquat, par exemple dans de l'acétonitrile.

Cette addition peut se poursuivre pendant une durée par exemple de 30 minutes à 1 h 30. Après l'addition et le mélange des réactifs et afin de poursuivre et terminer la réaction, le mélange réactionnel est ensuite maintenu à une température généralement de 15 à 30°C, de préférence à température ambiante, pendant une durée par exemple de 3 à 6 heures, de préférence de 4 à 5 heures.

Afin de récupérer le dérivé monosulfonylé en C-6 de la cyclodextrine à partir du mélange réactionnel à l'issue de la réaction, on réalise généralement la suite d'étapes suivante :
- on neutralise le mélange réactionnel, généralement par addition d'un acide, par exemple de l'acide chlorhydrique, de préférence dilué, afin de l'amener à un pH voisin de 7 ; la neutralisation a pour effet d'entraîner la précipitation de sel de métal,
- le précipité de sel de métal est séparé par toute technique de séparation liquide-solide convenable par exemple par filtration,
- on obtient ainsi une solution aqueuse de dérivé monosulfonylé en C-6 de la cyclodextrine, qui peut éventuellement être soumise à une autre opération de séparation afin d'éliminer toute trace de sel de métal restant en solution, et donner une solution aqueuse généralement limpide.
   On peut ainsi par exemple agiter la solution aqueuse issue de la filtration en présence de résine échangeuse d'ions,
- la solution aqueuse de dérivé monosulfonylé en C-6 de la cyclodextrine exempte de sel de métal est ensuite concentrée, par exemple par lyophilisation, par exemple à de 50 à 75% de son volume initial, de préférence aux 2/3 de son volume initial, ce qui entraîne la cristallisation du composé recherché, qui est recueilli par exemple par filtration, puis généralement lavé par exemple par de l'acétone et de l'éther, et enfin séché.

Eventuellement le produit final qui est le dérivé monosulfonylé en C-6 de la cyclodextrine est ensuite purifié, par exemple par une ou plusieurs recristallisations de préférence dans l'eau.

Le procédé de l'invention, en permettant la préparation avec un rendement élevé, inégalé, des dérivés monosulfonylés en C-6 des cyclodextrines, en particulier de la β cyclodextrine, tel que les 6^{I}-mono-p-toluènesulfonates de β-cyclodextrine, permet, de ce fait, un accès économiquement très amélioré au 6^{I}-amino-6^{I}-désoxy-cyclomaltoheptaose et 6^{I}-désoxy-6^{I}-isothiocyanatocyclomaltoheptaose, précurseurs obligés des dérivés monothiouréido décrits par exemple dans la demande de brevet PCT/FR 97/00449.

Le procédé de l'invention trouvera donc de manière générale son application dans le développement de l'utilisation des cyclodextrines, dans les domaines de la chimie supramoléculaire, du transport et de la biodisponibilité de médicaments, de l'encapsulation de parfums, des arômes, de la séparation chirale, etc...

D'autres caractéristiques et avantages de l'invention apparaîtront mieux à la lecture de l'exemple suivant donné à titre illustratif et non limitatif :

### Exemple : Préparation du 6^{I}-0-p-tolysulfonycyclomaltoheptaose

A une solution de β-cyclodextrine (11,35 g, 10 mmol) dans l'eau (500 ml), on ajoute successivement une solution de sulfate de cuivre (7,5 g, 30 mmol) dans l'eau (750 ml), puis une solution d'hydroxyde de sodium (10g, 250 mmol) dans l'eau (500 ml).

Le mélange est agité à température ambiante pendant 10 min (pH 12,7) puis on ajoute goutte à goutte une solution de chlorure de p-toluènesulfonyle (15g, 79 mmol) dans l'acétonitrile (100 ml) sur une période de 1 h 15.

Le mélange réactionnel est ensuite maintenu à température ambiante pendant 4 h 30.

La solution bleu foncée obtenue est neutralisée en utilisant de l'acide chlorhydrique 1 N (60 ml). Un précipité de couleur bleu turquoise apparaît alors, qui est éliminé par filtration.

Au cas où des traces de sels de cuivre resteraient encore en solution, ils peuvent être éliminés par agitation de la solution aqueuse en présence de résine échangeuse Duolite® GT-73.

La solution limpide est concentrée par lyophilisation aux 2/3 de son volume initial. Le 6^{I}-0-p-tolysulfonylcyclomaltoheptaose qui cristallise est récupéré par filtration et lavé par l'acétone (2 x 40 ml) et l'éther (2 x 30 ml) et séché (7,1g).

Après 2 recristallisations dans l'eau, on obtient 6,33 g (48%) de produit, pf 190-192 °C [α]_{D}²⁰ + 122° (c 4, Me₂SO). Les constantes physiques pour le même produit sont pf 160-162 °C [α]_{D}²⁰ + 118 ° (c 4, Me₂SO) dans Carbohydr.Res., 192 (1989) 251-258 et pf 179°C [α]_{D}²³ + 50,7° dans J. Am. Chem. Soc. 112 (1990) 3860-3868.

Les données de RMN ¹H et ¹³C sont identiques à celles décrites dans la littérature par R.C. Petter et al. J. Am. Chem. Soc. 112 (1990) 3860-3868.

Cet exemple démontre le rendement élevé obtenu par le procédé de l'invention, ainsi que la pureté élevée du produit final.

## Revendications

1. Procédé de préparation régiosélectif d'un dérivé monosulfonylé en C-6 d'une cyclodextrine, dans lequel on fait réagir ladite cyclodextrine, avec un agent de sulfonylation, dans une solution aqueuse alcaline, en présence d'un sel de métal susceptible de former un complexe de coordination avec les groupes hydroxyles secondaires de la cyclodextrine, et à l'issue de la réaction on récupère ledit dérivé monosulfonylé en C-6 de la cyclodextrine à partir du mélange réactionnel.

2. Procédé selon la revendication 1 dans lequel ladite cyclodextrine est choisie parmi les α-, β-, et γ- cyclodextrines.

3. Procédé selon la revendication 1 dans lequel ledit agent de sulfonylation est choisi parmi les chlorure d'aryl- et d'alkyl- sulfonyle, ledit groupe aryle pouvant éventuellement être substitué par un ou plusieurs substituants.

4. Procédé selon la revendication 3 dans lequel ledit agent de sulfonylation est le chlorure de paratoluènesulfonyle (chlorure de tosyle).

5. Procédé selon l'une quelconque des revendications 1 à 4 dans lequel ledit sel de métal susceptible de former un complexe de coordination avec les groupes hydroxyles secondaires de la cyclodextrine est choisi parmi les sels de lithium, cuivre et plomb.

6. Procédé selon la revendication 5 dans lequel ledit sel de métal est choisi parmi les nitrate et sulfate dudit métal.

7. Procédé selon la revendication 6 dans lequel ledit sel est le sulfate de cuivre.

8. Procédé selon l'une quelconque des revendications 1 à 7 dans lequel ladite solution aqueuse alcaline a un pH de 12,7 à 12,8.

9. Procédé selon l'une quelconque des revendications 1 à 8 dans lequel la réaction est réalisée par addition et mélange des réactifs et maintien du mélange réactionnel à une température de 15 à 30°C pendant une durée de 3 à 6 heures afin de poursuivre et terminer la réaction.

10. Procédé selon l'une quelconque des revendications 1 à 9 dans lequel à l'issue de la réaction, afin de récupérer ledit dérivé monosulfonylé en C-6 de la cyclodextrine, le mélange réactionnel est neutralisé pour faire précipiter le sel de métal, le précipité de sel de métal est séparé, la solution aqueuse obtenue de dérivé monosulfonylé en C-6 de la cyclodextrine exempte de sel de métal est concentrée, et le dérivé monosulfonylé en C-6 de la cyclodextrine qui cristallise est recueilli et éventuellement purifié.

## Patentansprüche

1. Regioselektives Verfahren zur Herstellung eines C6-Monosulfonyl-derivats eines Cyclodextrins, in welchem man das genannte Cyclodextrin mit einem Sulfonylierungsreagens in einer alkalischen wässrigen Lösung in Gegenwart eines Salzes eines Metalls, das imstande ist, einen Koordinationskomplex mit den sekundären Hydroxylgruppen des Cyclodextrins zu bilden, reagieren lässt und man am Ende der Reaktion das genannte C6-Monosulfonylderivat des Cyclodextrins aus der Reaktionsmischung zurückgewinnt.

2. Verfahren nach Anspruch 1, in welchem das genannte Cyclodextrin unter den α-, β- und γ-Cyclodextrinen gewählt ist.

3. Verfahren nach Anspruch 1, in welchem das genannte Sulfonylierungsreagens unter den Arylsulfonylchloriden und den Alkylsulfonylchloriden gewählt ist, wobei die genannte Arylgruppe gegebenenfalls mit einem oder mehreren Substituenten substituiert sein kann.

4. Verfahren nach Anspruch 3, in welchem das genannte Sulfonylierungsreagens Paratoluolsulfonylchlorid (Tosylchlorid) ist.

5. Verfahren nach einem der Ansprüche 1 bis 4, in welchem das genannte Salz eines Metalls, das imstande ist, einen Koordinationskomplex mit den sekundären Hydroxylgruppen des Cyclodextrins zu bilden, unter den Salzen von Lithium, Kupfer und Blei gewählt ist.

6. Verfahren nach Anspruch 5, in welchem das genannte Metallsalz unter dem Nitrat und Sulfat des genannten Metalls gewählt ist.

7. Verfahren nach Anspruch 6, in welchem das genannte Salz Kupfersulfat ist.

8. Verfahren nach einem der Ansprüche 1 bis 7, in welchem die genannte alkalische wässrige Lösung einen pH von 12,7 bis 12,8 hat.

9. Verfahren nach einem der Ansprüche 1 bis 8, in welchem die Reaktion ausgeführt wird durch Zusatz und Vermischung der Reagenzien und Halten der Reaktionsmischung auf einer Temperatur von 15 bis 30°C während einer Zeitdauer von 3 bis 6 Stunden, um die Reaktion zu verfolgen und zu beenden.

10. Verfahren nach einem der Ansprüche 1 bis 9, in welchem am Ende der Reaktion, um das genannte C6-Monosulfonylderivat des Cyclodextrins zurückzugewinnen, die Reaktionsmischung neutralisiert wird, um das Metallsalz auszufällen, der Niederschlag von Metallsalz abgetrennt wird, die erhaltene, von Metallsalz freie wässrige Lösung des C6-Monosulfonylderivats des Cyclodextrins konzentriert wird und das C6-Monosulfonylderivat des Cyclodextrins, das kristallisiert, gesammelt und gegebenenfalls gereinigt wird.

## Claims

1. Regioselective method for preparing a cyclodextrin derivative monosulfonylated at C-6, in which said cyclodextrin is caused to react with a sulfonylation agent, in an alkaline aqueous solution, in the presence of a metal salt able to form a coordination complex with the secondary hydroxyl groups of the cyclodextrin, and after the reaction said cyclodextrin derivative monosulfonylated at C-6 is recovered from the reaction mixture.

2. Method according to claim 1, in which said cyclodextrin is chosen from among the α-, β- and γ-cyclodextrins.

3. Method according to claim 1, in which said sulfonylation agent is chosen from among the aryl- and alkyl- sulfonyl chlorides, said aryl group optionally being substituted by one or more substituents.

4. Method according to claim 3, in which said sulfonylation agent is paratoluene-sulfonyl chloride (tosyl chloride).

5. Method according to any of claims 1 to 4, in which said metal salt able to form a co-ordination complex with the secondary hydroxyl groups of cyclodextrin is chosen from among lithium, copper and lead salts.

6. Method according to claim 5, in which said metal salt is chosen from among the nitrate and sulphate of said metal.

7. Method according to claim 6, in which said salt is copper sulfate.

8. Method according to any of claims 1 to 7, in which said alkaline aqueous solution has a pH of 12.7 to 12.8.

9. Method according to any of claims 1 to 8, in which the reaction is produced by addition and mixing of reagents and maintaining the reaction mixture at a temperature of 15 to 30°C for a period of 3 to 6 hours in order to continue and complete the reaction.

10. Method according to any of claims 1 to 9, in which after the reaction, in order to recover said cyclodextrin derivative monosulfonylated at C-6, the reaction mixture is neutralized to precipitate the metal salt, the precipitate of metal salt is separated, the aqueous solution obtained of cyclodextrin derivative monosulfonylated at C-6 that is free of metal salt is concentrated, and the cyclodextrin derivative monosulfonylated at C-6 which crystallizes is collected and optionally purified.
